# EUROPEAN PATENT SPECIFICATION

(11) **EP 4 325 225 B1**
(45) Date of publication and mention of the grant of the patent: **25.02.2026**
(21) Application number: 22787215.7
(22) Date of filing: 04.01.2022
(51) Int. Cl.: G01N 35/00, G01N 35/10

(54) **REAGENT KIT LOADING AND UNLOADING DEVICE, REAGENT SAMPLING APPARATUS, AND REAGENT KIT LOADING AND UNLOADING METHOD**
VORRICHTUNG ZUM BE- UND ENTLADEN EINES REAGENZIENKITS, VORRICHTUNG ZUR ENTNAHME VON REAGENZIENPROBEN UND VERFAHREN ZUM BE- UND ENTLADEN EINES REAGENZIENKITS
DISPOSITIF DE CHARGEMENT ET DE DÉCHARGEMENT DE TROUSSE DE RÉACTIFS, APPAREIL D'ÉCHANTILLONNAGE DE RÉACTIFS, ET PROCÉDÉ DE CHARGEMENT ET DE DÉCHARGEMENT DE TROUSSE DE RÉACTIFS

(30) Priority: 14.04.2021 CN 202110400214
(43) Date of publication of application: 21.02.2024
(73) Proprietor: Shenzhen Yhlo Biotech Co., Ltd, Shenzhen, 518116 Guangdong (CN)
(72) Inventor: HUANG, Xiutao, Shenzhen, Guangdong 518116 (CN); ZHANG, Fuxing, Shenzhen, Guangdong 518116 (CN); XIAO, Yujin, Shenzhen, Guangdong 518116 (CN)
(74) Representative: Mewburn Ellis LLP
(86) International application number: PCT/CN2022/070118
(87) International publication number: WO 2022/217983

(56) References cited:
- EP-A1- 0 632 271
- CN-A- 106 226 544
- CN-A- 108 445 245
- CN-A- 108 445 245
- CN-A- 109 142 766
- CN-A- 113 156 147
- CN-A- 113 495 166
- CN-B- 106 226 544
- CN-U- 206 038 705
- CN-U- 208 297 537
- CN-U- 208 795 751
- CN-U- 214 669 129
- JP-A- 2010 276 376
- US-A1- 2014 141 518
- US-B2- 9 656 266

## Description

### TECHNICAL FIELD

The present application relates to a field of chemiluminescent immunoassay technology, and in particularly, to a device and a method for loading and unloading reagent boxes, and a reagent dispensing apparatus.

### BACKGROUND

Chemiluminescent immunoassay technology has the advantages of short reaction time, simple operation, high diagnostic efficiency and the like. With the development of modern science, immunodiagnostic technology has gradually become a focus means of modern clinical testing and scientific research, and is used in the diagnosis of tumor, diabetes, abnormal gonadal secretion and other diseases. Due to complex manual operations, long reaction times, and environmental pollution, conventional detection means have gradually been replaced by chemiluminescent immunoassay technology.

At present, a chemiluminescent immunoassay system mainly includes a cuvette storage and transfer system, a sample loading system, a reagent loading system, a sample dispensing system, an incubation system, a centrifugal wash system, and a luminescent reading system. At present, the reagent loading system requires manual loading and unloading of reagent boxes in a receiving cavity of a reagent plate device, which is cumbersome to operate.

US 2014/141518 A1 discloses a reagent station for an automated analysis device, comprising a first and a second reagent container storage and a transfer apparatus which transfers reagent containers between the first and the second reagent container storage.

CN 106 226 544 B discloses a loading and unloading method and loading and unloading device for an in-vitro diagnosis instrument. The loading and unloading device for the kit is used for loading and unloading to a bearing part of the kit and comprises a support, a moving part, a first driving part and a grabbing mechanism, wherein the moving part is movably arranged on the support, the first driving part drives the moving part to move, and the grabbing mechanism is used for grabbing and releasing the kit. The moving part comprises a placement position for kit placement; the placement position is available for taking and placing of the kit when the moving part moves to a first preset position; a grabber of the grabbing mechanism is opposite to the placement position when the moving part moves to a second preset position; the grabber of the grabbing mechanism is opposite to the bearing part of the kit when the moving part moves to a third preset position or the grabber moves to a fourth preset position.

### SUMMARY

Accordingly, it is necessary to provide a device and a method for loading and unloading reagent boxes, and a reagent dispensing apparatus, to improve the convenience of loading and unloading.

Aspects of the invention are set out in the appended claims.

Compared with prior art, the above device for loading and unloading reagent boxes has the following advantages.

When the above device for loading and unloading reagent boxes loads the reagent box, the reagent box to be loaded is placed on the storage part of the transferring mechanism. The transferring mechanism transfers the reagent box to a loading port of the reagent plate device. The lifting member of the gripping mechanism drives the gripping claw to move down, so as to grip the reagent box and load the reagent box into the reagent plate device. When unloading the reagent box, the lifting member drives the gripping claw to move down, so as to grip the reagent box in the reagent plate device and place it on the storage part, and the transferring drive part drives the storage part to reset. In this way, the device for loading and unloading reagent boxes can automatically load and unload the reagent box in the receiving cavity of the reagent plate device. The operator only needs to place or remove the reagent box on the storage part, which is easy to operate.

A conventional reagent loading system needs to manually load and unload the reagent box in a shutdown state, which requires an ongoing test to be stopped and affects the test time and results. In addition, during the test, some reagents may be used up, and different reagents may be required for different test items. In these cases, reagent loading or reagent replacement is required, which would affect the ongoing test. In the device for loading and unloading reagent boxes of the above embodiments, other actions when loading the reagent box may be performed outside the reagent plate device in advance. The loading preparation detector is provided to detect whether the gripping claw is at the position of the preset height, and determine whether the gripping mechanism has completed the loading preparation action. If the results of detections are yes, when receiving the permission signal of loading of the reagent plate device, the lifting member drives the gripping claw to move down into the reagent plate device and load the reagent box. In this way, the automatic loading of the reagent box can be achieved under the condition that the reagent plate device is not stopped and the ongoing test is not affected, thereby improving the work efficiency and saving manpower.

According to the invention the reagent plate device further includes a loading cover for covering the loading port, and the lifting member is configured to drive the gripping claw to move to a position of the loading port to open or close the loading cover.

### BRIEF DESCRIPTION OF THE DRAWINGS

FIG. 1 is a perspective schematic diagram of a device for loading and unloading reagent boxes according to an embodiment.
FIG. 2 is a perspective schematic diagram of a gripping mechanism in the device for loading and unloading reagent boxes shown in FIG. 1.
FIG. 3 is a perspective schematic diagram of a transferring mechanism in the device for loading and unloading reagent boxes shown in FIG. 1.
FIG. 4 is a perspective schematic diagram of a first clamping arm in the gripping mechanism shown in FIG. 2.
FIG. 5 is a perspective schematic diagram of the first clamping arm in the gripping mechanism shown in FIG. 2 from another perspective.
FIG. 6 is a perspective schematic diagram of a reagent dispensing apparatus including the device for loading and unloading reagent boxes shown in FIG. 1.
FIG. 7 is a cross-sectional view of a loading cover in the reagent dispensing apparatus shown in FIG. 6.

Illustration For Reference Numerals:
100, device for loading and unloading reagent boxes; 110, gripping mechanism; 120, transferring mechanism; 121, transferring drive part; 1212, rotation drive motor; 1214, synchronous belt; 122, storage part; 111, lifting member; 1112, lifting drive motor; 1114, screw rod; 1116, mounting member; 1118, guide rail; 112, gripping claw; 1121, first clamping arm; 1122, second clamping arm; 1125, first V-shaped groove; 130, reagent box detector; 140, identification code scanner; 200, reagent dispensing apparatus; 210, reagent plate device; 220, loading preparation detector; 214, loading port; 212, loading cover; 2122, cover plate; 2124, cover handle; 2126, embedding part; 2128, heat insulating foam; 230, base.

### DETAILED DESCRIPTION OF THE EMBODIMENTS

In order to facilitate the understanding of the present application, the present application will be described more comprehensively below with reference to the relevant drawings. Preferred embodiments of the present application are shown in the drawings. However, the present application can be implemented in many different forms, not limited to the embodiments described herein. Rather, these embodiments are provided for the purpose of providing a more thorough understanding of the present application.

It should be noted that, when an element is referred to as being "disposed on" another element, it may be directly on the other element or there may also present an intermediate element. When an element is referred to as being "connected" to another element, it may be directly connected to the other element or there might present an intermediate element at the same time. The terms "vertical", "horizontal", "left", "right" and similar expressions used herein are only for the purpose of illustration, rather than presenting the only ways for implementation.

In the description of the present application, it should be understood that, the terms "first" and "second" are only intended for illustrative purposes, rather than being construed as indicating or implying relative importance or implicitly designating the number of the technical features as indicated. Thus, the features defined by "first" and "second" may explicitly or implicitly include at least one of said features.

Unless otherwise defined, all technical and scientific terms used herein have the same meanings as those commonly understood by those skilled in the art of the present application. The terms used in the description of the present application herein are only for the purpose of describing specific embodiments and are not intended to limit the present application. The term "and/or" used herein includes any and all combinations of one or more associated listed items.

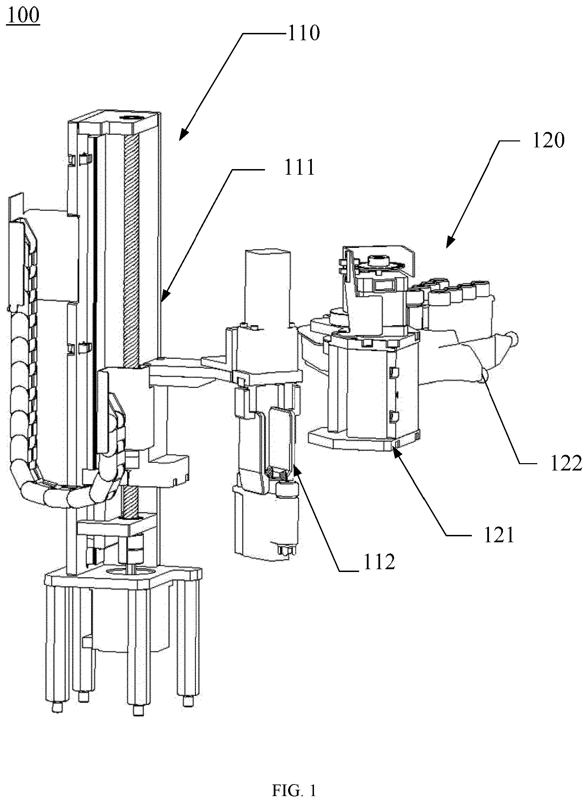

Referring to FIGS. 1 to 3, a device for loading and unloading reagent boxes according to an embodiment of the present application includes a gripping mechanism 110 and a transferring mechanism 120.

The gripping mechanism 110 and the transferring mechanism 120 are disposed adjacent to a reagent plate device.

The transferring mechanism 120 includes a transferring drive part and a storage part. The transferring drive part is connected to the storage part to drive the storage part to move to transfer the reagent box.

The gripping mechanism 110 includes a lifting member 111 and a gripping claw 112. The lifting member 111 is connected to the gripping claw 112 to drive the gripping claw 112 to move up or down so that the gripping claw 112 grips the reagent box, and transfers the reagent box between a reagent plate device 210 and the storage part 122.

During loading the reagent box, the reagent box to be loaded is placed, for example manually, on the storage part 122 of the transferring mechanism 120. The transferring mechanism 120 transfers the reagent box to a loading port 214 of the reagent plate device 210. The lifting member 111 of the gripping mechanism 110 drives the gripping claw 112 to move down, so as to grip the reagent box and load the reagent box into the reagent plate device 210. When unloading the reagent box, the lifting member drives the gripping claw to move down, so as to grip the reagent box in the reagent plate device and place it on the storage part, and the transferring drive part drives the storage part to reset. In this way, the device for loading and unloading reagent boxes 100 can automatically load and unload the reagent box in a receiving cavity of the reagent plate device 210. The operator only needs to place or remove the reagent box on the storage part 122, which is simple to operate.

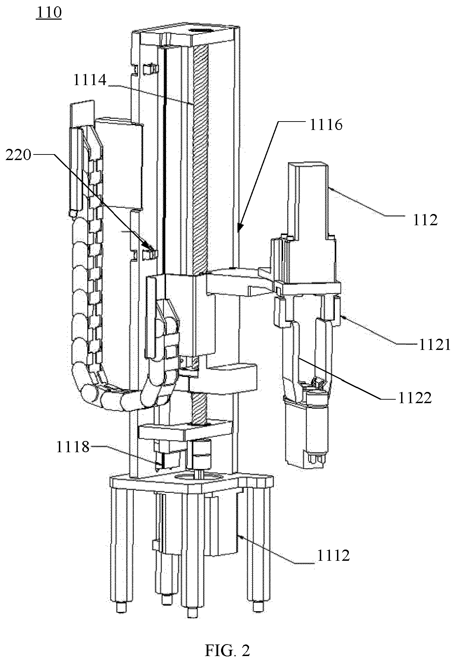

As shown in FIG. 2, in an example, the lifting member 111 includes a lifting drive motor 1112, a screw rod 1114, and a mounting member 1116. The screw rod 1114 is vertically arranged. The lifting drive motor 1112 is connected to the screw rod 1114. The mounting member 1116 is threadedly connected to the screw rod 1114. The gripping claw 112 is connected to the mounting member 1116. In this example, the lifting drive motor 1112 drives the screw rod 1114 to rotate, and the mounting member 1116 moves along the screw rod 1114 to drive the gripping claw 112 to move up or down.

Further, in an example, the lifting member 111 further includes a guide rail 1118 extending in a vertical direction. The mounting member 1116 slidably engages with the guide rail 1118. Thus, the stability of the movements of the mounting member 1116 and the gripping claw 112 can be ensured by the guide rail 1118.

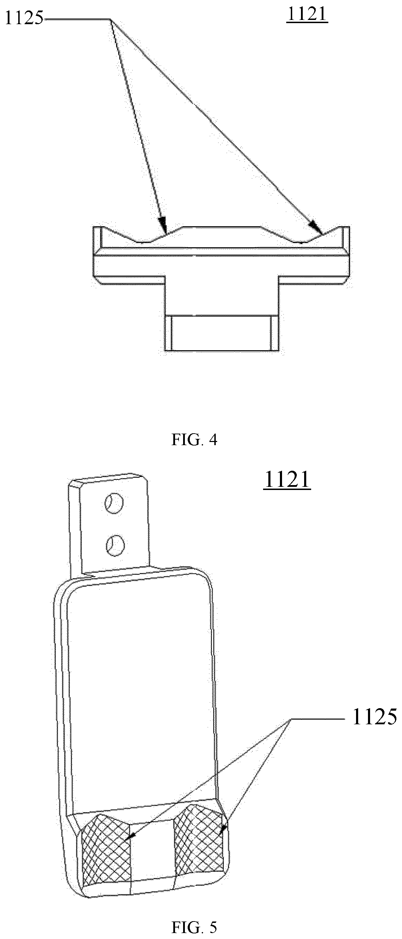

As shown in FIGS. 2, 4 and 5, in an example, the gripping claw 112 includes a first clamping arm 1121 and a second clamping arm 1122. The first clamping arm 1121 and the second clamping arm 1122 face each other and can approach or move away from each other. When the first clamping arm 1121 and the second clamping arm 1122 approach each other, the reagent box can be gripped, and when the first clamping arm 1121 and the second clamping arm 1122 move away from each other, the reagent box can be released. The driving forces of the first clamping arm 1121 and the second clamping arm 1122 may be provided by electric, pneumatic, and other means. In the specific example shown in the figures, the first clamping arm 1121 is provided with a first V-shaped groove 1125 on a side facing the second clamping arm 1122, and the second clamping arm 1122 is provided with a second V-shaped groove on a side facing the first clamping arm 1121. The first V-shaped groove 1125 and the second V-shaped groove extend in the vertical direction, and face each other.

In an example, a plurality of first V-shaped grooves 1125, such as two, three, or more first V-shaped grooves 1125 are provided. Correspondingly, a plurality of second V-shaped grooves are provided. The plurality of first V-shaped grooves 1125 and the plurality of second V-shaped grooves are in one-to-one correspondence.

In an example, a groove wall surface of the first V-shaped groove 1125 is provided with an anti-slip pattern, such as a grid pattern. In an example, a groove wall surface of the second V-shaped groove is provided with an anti-slip pattern, such as a grid pattern. The anti-slip pattern can increase a friction force between the groove wall surface and a neck of in a bottle in the reagent box and ensure the reliability of gripping.

In an example, the gripping claw 112 is made of a metallic material. A grid pattern is provided on the gripping claw 112 to increase the friction force. In addition, a soft rubber material layer may be provided on the V-shaped groove to increase the friction force through partial deformation of the soft rubber.

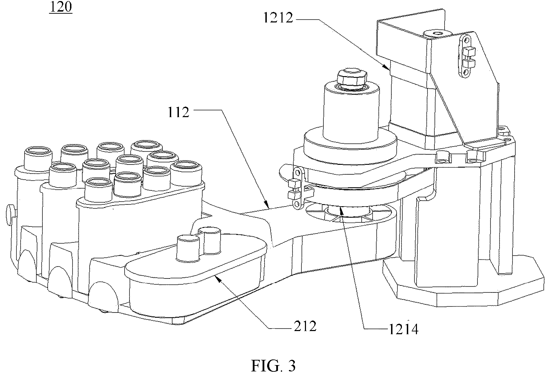

As shown in FIG. 3, in an example, the transferring drive part 121 includes a rotation driver. The rotation driver includes a rotation drive motor 1212 and a synchronous belt 1214. The rotation driver is configured to drive the storage part 122 to rotate between a removing-placing station, an avoidance station and a gripping station. The removing-placing station is configured to remove or place the reagent box on the storage part 122. The gripping station is located below the gripping claw 112, so that the gripping claw 112 grips the reagent box on the gripping station when moving down. The avoidance station deviates from the gripping station. When the gripping claw 112 enters and exits the reagent plate device 210, the storage part 122 rotates to the avoidance station.

In an example, the storage part 122 is a plate with receiving grooves.

One or more receiving grooves on the storage part 122 can be provided. In the specific example shown in the figure, the storage part 122 is provided with three reagent box receiving portions, so that three reagent boxes can be transferred at the same time. Gaps between the reagent boxes are reduced as much as possible, so that the overall size of the storage part 122 is small, which not only satisfies the loading of the plurality of reagent boxes, but also ensures the strength of the storage part 122, reduces the load and vibration of the horizontal rotation motion, reduces the driving requirements of the horizontal rotation motion, and ensures the reliability of the motion.

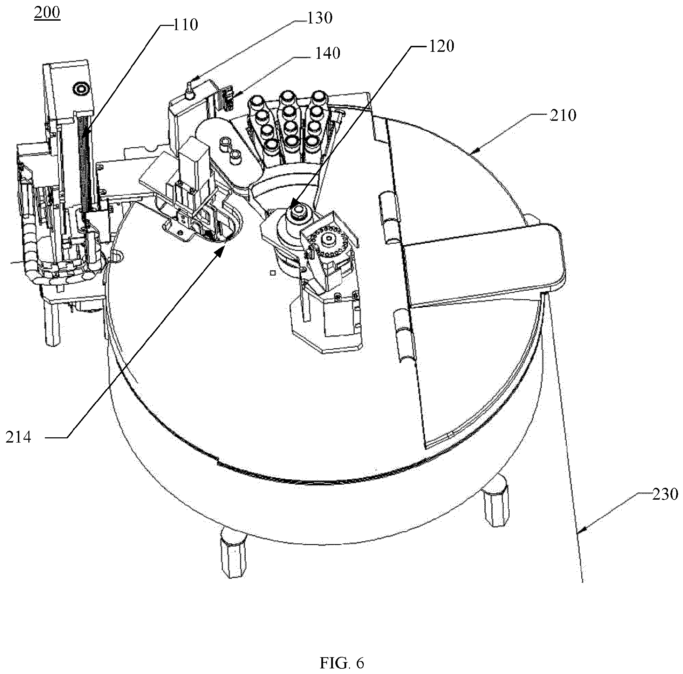

Further, referring to FIG. 6, the present application further provides a reagent dispensing apparatus 200 including a reagent plate device 210 and the device for loading and unloading reagent boxes 100 of any of the above examples. The reagent plate device 210 includes a receiving cavity, a loading port 214 in communication with the receiving cavity, and a reagent loading plate disposed in the receiving cavity. The lifting member 111 is configured to drive the gripping claw 112 to load or unload the reagent box on the reagent loading plate through the loading port 214.

The reagent dispensing apparatus 200 includes the device for loading and unloading reagent boxes 100 of any of the above examples, so that corresponding technical effects can be obtained.

In the specific example shown in FIG. 6, the gripping mechanism 110 is mounted on a base 230 of the whole device, and the transferring mechanism 120 is mounted on a plate cover of the reagent plate device 210. The gripping mechanism 110 and the transferring mechanism 120 are mounted separately, are not necessary to be mounted on a same bracket, and the overall configuration is relatively simple.

In an example, the device for loading and unloading reagent boxes 100 further includes a loading preparation detector 220. The loading preparation detector 220 is configured to detect whether the gripping claw 112 is at a position of a preset height. In this example, the reagent dispensing apparatus 200 further includes a control mechanism. The control mechanism is electrically connected to the reagent plate device 210 and the gripping mechanism 110. When the loading preparation detector 220 detects that the gripping claw 112 is at the position of the preset height, and the control mechanism receives a permission signal of loading of the reagent plate device 210, the control mechanism controls the lifting member 111 to drive the gripping claw to move down into the reagent plate device 210 and load the reagent box.

A conventional reagent loading system needs to manually load and unload the reagent box in a shutdown state, which requires an ongoing test to be stopped and affects the test time and results. In addition, during the test, some reagents may be used up, and different reagents may be required for different test items. In these cases, reagent loading or reagent replacement is required, which would affect the ongoing test.

To solve this problem, in the device for loading and unloading reagent boxes 100 of the above examples, other actions when loading the reagent box may be performed outside the reagent plate device 210 in advance. The loading preparation detector 220 is provided to detect whether the gripping claw 112 is at the position of the preset height, and determine whether the gripping mechanism 110 has completed the loading preparation action. If the results of detections are yes, when receiving the permission signal of loading of the reagent plate device 210, the lifting member 111 drives the gripping claw to move down into the reagent plate device 210 and load the reagent box. In this way, the automatic loading of the reagent box can be achieved under the condition that the reagent plate device 210 is not stopped and the ongoing test is not affected, thereby improving the work efficiency and saving manpower.

The position of the preset height is preferably close to the loading port 214 of the reagent plate device 210, so that when placing the reagent box in the end, the stroke of the vertical movement is the shortest, the movement time is the shortest, and the influence on the normal test is minimized.

As shown in FIG. 6, in an example, the device for loading and unloading reagent boxes 100 further includes a reagent box detector 130 and an identification code scanner 140. During the loading of the reagent box, the reagent box detector 130 is configured to detect whether there is a reagent box on the storage part 122 before the storage part 122 moves to the gripping station. When the reagent box detector 130 detects a reagent box, the identification code scanner 140 reads an identification code information on the reagent box.

By using the reagent box detector 130 and the identification code scanner 140, the detection of reagent box and the reading of identification code information can be completed before loading, and the obtained identification code information can be entered into the system in advance, so that after the reagent box is loaded into the reagent plate device 210, it can be used without scanning the code again.

When no reagent box is detected by the reagent box detector 130, the transferring drive part 121 drives the storage part 122 to return to the removing-placing station, for the subsequent steps to be performed after placing the reagent box.

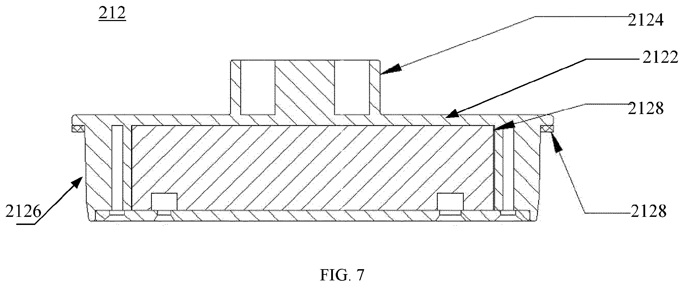

As shown in FIGS. 6 and 7, in an example, the reagent plate device 210 further includes a loading cover 212 configured for covering the loading port 214. The lifting member 111 is configured to drive the gripping claw 112 to move to the position of the loading port 214 to open or close the loading cover 212.

The reagent plate device 210 is additionally provided with the loading cover 212 to meet refrigerating requirements of certain reagents, so that it is more adaptable. The opening and closing of the loading cover 212 can be realized through the gripping mechanism 110 without involving other driving manners, so that the configuration is simple.

Further, in an example, the storage part 122 is provided with a loading cover receiving position in addition to the reagent box receiving portion. After gripping the loading cover 212 to expose the loading port 214 of the reagent plate device 210, the gripping claw 112 places the loading cover 212 on the loading cover receiving portion of the storage part 122 for temporary storage. After loading the reagent box, the gripping claw 112 grips the loading cover 212 from the storage part 122 and makes it cover the loading port 214 again.

It can be understood that, in other examples, the reagent plate device 210 may not be provided with the loading cover 212, and the gripping mechanism 110 may directly load or unload the reagent box in the reagent loading plate through the loading port 214.

In an example, the loading cover 212 includes a cover plate 2122, a cover handle 2124, and an embedding part 2126. The cover plate 2122 is configured to cover the loading port 214. The cover handle 2124 is disposed on the cover plate 2122, which can be used to move the entire loading cover 212. The embedding part 2126 is disposed on a side of the cover plate 2122 away from the cover handle 2124 for embedding into the loading port 214.

The cover plate 2122, the cover handle 2124, and the embedding part 2126 are preferably made of a low thermal conductive material, such as a plastic material. Further, the embedding part 2126 is provided with a heat insulation cavity. A heat insulating foam disposed in the heat insulation cavity, to improve the heat insulation effect of the reagent plate device 210. In addition, a heat insulating foam 2128 is also disposed between an edge of the cover plate 2122 and the embedding part 2126, so that the portion where an edge of the loading cover 212 is attached to the loading port 214 is not easy to leak cold, thereby avoiding the formation of condensation water.

Further, the present application further provides a method for loading and unloading reagent boxes using the device for loading and unloading reagent boxes 100 of any of the above examples or the reagent dispensing apparatus 200 of any of the above examples.

A process for loading the reagent box includes following steps:
placing the reagent box on the storage part;
driving the storage part by the transferring drive part to move to be below the gripping claw; and
driving the gripping claw to move down by the lifting member, to grip the reagent box and load the reagent box into the reagent plate device.

A process for unloading the reagent box includes the following steps:
driving the gripping claw to move down to grip the reagent box in the reagent plate device, and to move up, by the lifting member;
driving the storage part by the transferring drive part to move to be below the gripping claw;
driving the gripping claw to move down by the lifting member, to place the reagent box on the storage part; and
driving the storage part by the transferring drive part to reset.

The present application is further described with an example of the working process of the reagent dispensing apparatus 200 shown in FIG. 6.

The steps of a process of loading the reagent box of the reagent dispensing apparatus 200 of the specific example shown in FIG. 6 are described below.

At step 1, the transferring drive part 121 of the transferring mechanism 120 drives the storage part 122 to move to the removing-placing station of the reagent box, and the reagent box is placed manually. Then, the storage part 122 moves to the avoidance station, where the gripping device can avoid the transferring mechanism 120 while moving up and down. During the movement, the reagent box detector 130 detects the presence or absence of the reagent box on the storage part 122. After detecting the presence of the reagent box, a barcode scanner reads a barcode information of the corresponding reagent box and enters the barcode information into the system in advance, so that after the reagent box is loaded into the reagent plate device 210, it can be used without further identification.

At step 2, after the storage part 122 moves to the avoidance station, the gripping claw 112 of the gripping mechanism 110 opens, moves from an initial position to the loading port 214 of the reagent plate device 210, grips the loading cover 212, and then returns to the initial position. The loading cover receiving portion of the storage part 122 moves to the gripping station, and the gripping claw 112 gripping the loading cover 212 moves down to the storage part 122, then opens and returns to the initial position. At this time, the loading cover 212 is transferred to the loading cover receiving portion of the storage part 122.

At step 3, the reagent box receiving portion of the storage part 122 moves to the gripping station, the gripping claw 112 of the gripping mechanism 110 opens and moves from the initial position to the reagent box receiving portions of the rotating plate, so as to grip the reagent box and return to the initial position. The storage part 122 moves to the avoidance station. The gripping claw 112 grips the reagent box to move to the position of the preset height, and waits for the system to allow the reagent box to be loaded.

The above movements are all external to the reagent plate device 210 and does not affect the ongoing test.

At step 4, after receiving the permission signal of loading of the reagent plate device 210, the reagent plate of the reagent plate device 210 moves to the corresponding loading position. The gripping claw 112 grips the reagent box and moves downward to the loading position. The gripping claw 112 opens and moves upward for a distance. Then, the gripping claw 112 opens and closes again. After confirming that the reagent box has been completely released, the gripping claw 112 moves up to the position of the preset height again, so that the reagent plate device 210 can perform the related test normally. Finally, the gripping claw 112 returns to the initial position. In this way, one loading of the reagent box is completed.

Steps 3 and 4 are repeated to load the reagent box up to three times.

At step 5, after loading the reagent box, the loading cover receiving portion of the storage part 122 moves to the gripping station, and the gripping claw 112 moves from the initial position to the storage part 122, so as to grip the loading cover 212 and return to the initial position. The storage part 122 moves to the avoidance station again. The gripping claw 112 grips the loading cover 212, moves to the position of the loading port 214 of the reagent plate device 210, and presses the loading cover 212 onto the loading port 214, so as to seal the loading port 214 of the reagent plate device 210 to avoid the formation of the condensation water.

The unloading process of the reagent box is generally reversed to the loading process, which is briefly described as follows.

When unloading the reagent box, the gripping claw 112 grips the loading cover 212 of the reagent plate device 210 and then moves up. The storage part 122 moves to the gripping station. The gripping claw 112 places the loading cover 212 on the storage part 122 and moves up to the position of the preset height. The storage part 122 moves to the avoidance station. After receiving the permission signal of unloading of the reagent plate device 210, the gripping claw 112 moves down, grips the reagent box, and then places the reagent box on the storage part 122. After the reagent box is unloaded, the gripping claw 112 grips the loading cover 212 from the storage part 122 and covers the loading port 214 of the reagent plate device 210 to seal it again.

When the above device for loading and unloading reagent boxes 100 loads the reagent box, the reagent box to be loaded is placed, for example manually, on the storage part 122 of the transferring mechanism 120. The transferring mechanism 120 transfers the reagent box to the loading port 214 of the reagent plate device 210. The lifting member 111 of the gripping mechanism 110 drives the gripping claw 112 to move down, so as to grip the reagent box and load the reagent box into the reagent plate device 210. When unloading the reagent box, the lifting member drives the gripping claw to move down, so as to grip the reagent box in the reagent plate device and place it on the storage part, and the transferring drive part drives the storage part to reset. In this way, the device for loading and unloading reagent boxes 100 can automatically load and unload the reagent box in the receiving cavity of the reagent plate device 210. The operator only needs to place or remove the reagent box in the storage part 122, which is easy to operate.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements fall within the protection scope of the present application. Therefore, the scope of protection of the patent application shall be subject to the appended claims.

## Claims

1. A reagent dispensing apparatus (200), comprising
a reagent plate device (210) comprising a receiving cavity, a loading port (214) in communication with the receiving cavity, and a reagent loading plate disposed in the receiving cavity;
a device for loading and unloading reagent boxes (100) comprising:
a gripping mechanism (110) comprising a lifting member (111) and a gripping claw (112) that is connected to the lifting member (111);
a transferring mechanism (120) comprising a transferring drive part (121) and a storage part (122) that is connected to the transferring drive part (121), the transferring drive part (121) being configured to drive the storage part (122) to move to transfer a reagent box; and
a loading preparation detector (220) configured to detect whether the gripping claw (112) is at a position of a preset height,
wherein the gripping mechanism (110) and the transferring mechanism (120) are disposed adjacent to a reagent plate device (210), and the lifting member (111) is configured to drive the gripping claw (112) to move up or down so that the gripping claw (112) grips the reagent box and transfers the reagent box between the reagent plate device (210) and the storage part (122),
wherein the lifting member (111) is configured to drive the gripping claw (112) to load or unload the reagent box on the reagent loading plate through the loading port (214),
wherein the reagent dispensing apparatus (200) further comprises a control mechanism electrically connected to the reagent plate device (210) and the gripping mechanism (110), whereby, when the loading preparation detector (220) detects that the gripping claw (112) is at the position of the preset height and the control mechanism receives a permission signal of loading of the reagent plate device (210), the control mechanism controls the lifting member (111) to drive the gripping claw (112) to move down into the reagent plate device (210) and load the reagent box, and
wherein the reagent plate device (210) further comprises a loading cover (212) configured to cover the loading port (214); and the lifting member (111) is configured to drive the gripping claw (112) to move to a position of the loading port (214) to open or close the loading cover (212).

2. The reagent dispensing apparatus (200) according to claim 1, wherein the transferring drive part (121) comprises a rotation driver, and wherein the rotation driver is configured to drive the storage part (122) to rotate between a removing-placing station, an avoidance station, and a gripping station; the removing-placing station is configured to remove or place the reagent box on the storage part (122); the gripping station is located below the gripping claw (112); and the avoidance station deviates from the gripping station.

3. The reagent dispensing apparatus (200) according to claim 2, further comprising a reagent box detector (130) and an identification code scanner (140),
wherein the reagent box detector (130) is configured to detect whether there is a reagent box on the storage part (122) before the storage part (122) moves to the gripping station, and when the reagent box detector (130) detects the reagent box, the identification code scanner (140) reads an identification code information on the reagent box.

4. The reagent dispensing apparatus (200) according to claim 1, wherein the lifting member (111) comprises a lifting drive motor (1112), a screw rod (1114), a guide rail (1118), and a mounting member (1116),
wherein the screw rod (1114) is vertically arranged; the lifting drive motor (1112) is connected to the screw rod (1114); the mounting member (1116) is threadedly connected to the screw rod (1114); the guide rail (1118) extends vertically; the mounting member (1116) slidably engages with the guide rail (1118); and the gripping claw (112) is connected to the mounting member (1116).

5. The reagent dispensing apparatus (200) according to any one of claims 1 to 4, wherein the gripping claw (112) comprises a first clamping arm (1121) and a second clamping arm (1122) facing each other,
wherein the first clamping arm (1121) is provided with a first V-shaped groove (1125) on a side facing the second clamping arm (1122), and the second clamping arm (1122) is provided with a second V-shaped groove on a side facing the first clamping arm (1121).

6. The reagent dispensing apparatus (200) according to claim 5, wherein
a groove wall surface of the first V-shaped groove (1125) is provided with an anti-slip pattern; and/or
a groove wall surface of the second V-shaped groove is provided with an anti-slip pattern.

7. A method for loading and unloading reagent boxes, **characterized by** comprising using the reagent dispensing apparatus (200) according to any one of claims 1 to 6,
wherein a process for loading a reagent box comprises:
placing the reagent box on the storage part (122);
driving the storage part (122) by the transferring drive part (121) to move to be below the gripping claw (112); and
driving the gripping claw (112) to move down by the lifting member (111), to grip the reagent box and load the reagent box into the reagent plate device (210), and
wherein a process for unloading the reagent box comprises:
driving the gripping claw (112) to move down to grip the reagent box in the reagent plate device (210), and to move up, by the lifting member (111);
driving the storage part (122) by the transferring drive part (121) to move to be below the gripping claw (112);
driving the gripping claw (112) to move down by the lifting member (111), to place the reagent box on the storage part (122); and
driving the storage part (122) by the transferring drive part (121) to reset.

## Patentansprüche

1. Reagenzienabgabevorrichtung (200), umfassend:
eine Reagenzienplattenvorrichtung (210), umfassend einen Aufnahmehohlraum, eine Ladeöffnung (214) in Kommunikation mit dem Aufnahmehohlraum und eine in dem Aufnahmehohlraum angeordnete Reagenzienladeplatte;
eine Vorrichtung zum Beladen und Entladen von Reagenzienbehältern (100), umfassend:
einen Greifmechanismus (110), umfassend ein Hebeelement (111) und eine Greifklaue (112), die mit dem Hebeelement (111) verbunden ist;
einen Transportmechanismus (120), umfassend einen Transportantriebsteil (121) und einen Lagerungsteil (122), der mit dem Transportantriebsteil (121) verbunden ist, wobei der Transportantriebsteil (121) dazu ausgelegt ist, den Lagerungsteil (122) anzutreiben, sodass er sich bewegt, um einen Reagenzienbehälter zu transportieren; und
einen Ladevorbereitungsdetektor (220), der dazu ausgelegt ist, zu detektieren, ob die Greifklaue (112) in einer Position einer voreingestellten Höhe ist,
wobei der Greifmechanismus (110) und der Transportmechanismus (120) benachbart zu einer Reagenzienplattenvorrichtung (210) angeordnet sind und das Hebeelement (111) dazu ausgelegt ist, die Greifklaue (112) anzutreiben, sodass sie sich nach oben oder unten bewegt, sodass die Greifklaue (112) den Reagenzienbehälter ergreift und den Reagenzienbehälter zwischen der Reagenzienplattenvorrichtung (210) und dem Lagerungsteil (122) transportiert,
wobei das Hebeelement (111) dazu ausgelegt ist, die Greifklaue (112) anzutreiben, sodass sie den Reagenzienbehälter auf der Reagenzienladeplatte durch die Ladeöffnung hindurch (214) be- oder entlädt,
wobei die Reagenzienabgabevorrichtung (200) ferner einen Steuermechanismus umfasst, der elektrisch mit der Reagenzienplattenvorrichtung (210) und dem Greifmechanismus (110) verbunden ist, wobei, wenn der Ladevorbereitungsdetektor (220) detektiert, dass die Greifklaue (112) sich in der Position der voreingestellten Höhe befindet, und der Steuermechanismus ein Erlaubnissignal für das Beladen der Reagenzienplattenvorrichtung (210) empfängt, der Steuermechanismus das Hebeelement (111) derart steuert, dass es die Greifklaue (112) antreibt, um sich nach unten in die Reagenzienplattenvorrichtung (210) zu bewegen und den Reagenzienbehälter zu beladen, und
wobei die Reagenzienplattenvorrichtung (210) ferner eine Ladeabdeckung (212) umfasst, die dazu ausgelegt ist, die Ladeöffnung (214) abzudecken; und das Hebeelement (111) dazu ausgelegt ist, die Greifklaue (112) derart anzutreiben, dass sie sich zu einer Position der Ladeöffnung (214) bewegt, um die Ladeabdeckung (212) zu öffnen oder zu schließen.

2. Reagenzienabgabevorrichtung (200) nach Anspruch 1, wobei der Transportantriebsteil (121) einen Drehantrieb umfasst und wobei der Drehantrieb dazu ausgelegt ist, den Lagerungsteil (122) derart anzutreiben, dass er sich zwischen einer Entfernungs-Platzierungs-Station, einer Vermeidungsstation und einer Greifstation dreht; wobei die Entfernungs-Platzierungs-Station dazu ausgelegt ist, den Reagenzienbehälter zu entfernen oder auf dem Lagerungsteil (122) zu platzieren; die Greifstation unterhalb der Greifklaue (112) angeordnet ist; und die Vermeidungsstation sich von der Greifstation verschwenkt..

3. Reagenzienabgabevorrichtung (200) nach Anspruch 2, ferner umfassend einen Reagenzienbehälterdetektor (130) und einen Identifikationscodescanner (140),
wobei der Reagenzienbehälterdetektor (130) dazu ausgelegt ist, zu detektieren, ob ein Reagenzienbehälter auf dem Lagerungsteil (122) ist, bevor der Lagerungsteil (122) sich zu der Greifstation bewegt, und, wenn der Reagenzienbehälterdetektor (130) den Reagenzienbehälter detektiert, der Identifikationscodescanner (140) eine Identifikationscodeinformation auf dem Reagenzienbehälter liest.

4. Reagenzienabgabevorrichtung (200) nach Anspruch 1, wobei das Hebeelement (111) einen Hebeantriebsmotor (1112), eine Gewindestange (1114), eine Führungsschiene (1118) und ein Montageelement (1116) umfasst,
wobei die Gewindestange (1114) vertikal angeordnet ist; der Hebeantriebsmotor (1112) mit der Gewindestange (1114) verbunden ist; das Montageelement (1116) mit der Gewindestange (1114) über eine Gewindeverbindung verbunden ist; die Führungsschiene (1118) sich vertikal erstreckt; das Montageelement (1116) verschiebbar mit der Führungsschiene (1118) in Eingriff steht; und die Greifklaue (112) mit dem Montageelement (1116) verbunden ist.

5. Reagenzienabgabevorrichtung (200) nach einem der Ansprüche 1 bis 4, wobei die Greifklaue (112) einen ersten Klemmarm (1121) und einen zweiten Klemmarm (1122) umfasst, die einander gegenüberliegen,
wobei der erste Klemmarm (1121) mit einer ersten V-förmigen Vertiefung (1125) auf einer Seite, die dem zweiten Klemmarm (1122) zugewandt ist, bereitgestellt ist, und der zweite Klemmarm (1122) mit einer zweiten V-förmigen Vertiefung auf einer Seite, die dem ersten Klemmarm (1121) zugewandt ist, bereitgestellt ist.

6. Reagenzienabgabevorrichtung (200) nach Anspruch 5, wobei
eine Vertiefungswandfläche der ersten V-förmigen Vertiefung (1125) mit einer Rutschschutzstruktur bereitgestellt ist; und/oder
eine Vertiefungswandfläche der zweiten V-förmigen Vertiefung mit einer Rutschschutzstruktur bereitgestellt ist.

7. Verfahren zum Be- und Entladen von Reagenzienbehältern, **dadurch gekennzeichnet, dass** es das Verwenden einer Reagenzienabgabevorrichtung (200) nach einem der Ansprüche 1 bis 6 umfasst,
wobei ein Prozess zum Beladen eines Reagenzienbehälters Folgendes umfasst:
Platzieren des Reagenzienbehälters auf dem Lagerungsteil (122);
Antreiben des Lagerungsteils (122) durch den Transportantriebsteil (121), sodass er sich bewegt, um unterhalb der Greifklaue (112) zu sein; und
Antreiben der Greifklaue (112) durch das Hebeelement (111), sodass sie sich nach unten bewegt, um den Reagenzienbehälter zu ergreifen und den Reagenzienbehälter in die Reagenzienplattenvorrichtung (210) zu laden, und
wobei ein Prozess für das Entladen des Reagenzienbehälters Folgendes umfasst:
Antreiben der Greifklaue (112) durch das Hebeelement (111), um sich nach unten zu bewegen, um den Reagenzienbehälter in der Reagenzienplattenvorrichtung (210) zu ergreifen, und sich nach oben zu bewegen;
Antreiben des Lagerungsteils (122) durch den Transportantriebsteil (121), sodass er sich bewegt, um unterhalb der Greifklaue (112) zu sein;
Antreiben der Greifklaue (112) durch das Hebeelement (111), sodass sie sich nach unten bewegt, um den Reagenzienbehälter auf dem Lagerungsteil (122) zu platzieren; und
Antreiben des Lagerungsteils (122) durch den Transportantriebsteil (121) zum Zurücksetzen.

## Revendications

1. Appareil de distribution de réactif (200), comprenant
un dispositif de plaque de réactif (210) comprenant une cavité de réception, un orifice de chargement (214) en communication avec la cavité de réception, et une plaque de chargement de réactif disposée dans la cavité de réception ;
un dispositif de chargement et de déchargement de boîtes de réactif (100), comprenant :
un mécanisme de préhension (110) comprenant un élément de levage (111) et une pince de préhension (112) qui est reliée à l'élément de levage (111) ;
un mécanisme de transfert (120) comprenant une partie d'entraînement de transfert (121) et une partie de stockage (122) qui est reliée à la partie d'entraînement de transfert (121), la partie d'entraînement de transfert (121) étant configurée pour entraîner la partie de stockage (122) à se déplacer pour transférer une boîte de réactif ; et
un détecteur de préparation de chargement (220) configuré pour détecter si la pince de préhension (112) est dans une position d'une hauteur prédéfinie,
dans lequel le mécanisme de préhension (110) et le mécanisme de transfert (120) sont disposés de manière adjacente à un dispositif de plaque de réactif (210), et l'élément de levage (111) est configuré pour entraîner la pince de préhension (112) à se déplacer vers le haut ou vers le bas de telle sorte que la pince de préhension (112) saisisse la boîte de réactif et transfère la boîte de réactif entre le dispositif de plaque de réactif (210) et la partie de stockage (122),
dans lequel l'élément de levage (111) est configuré pour entraîner la pince de préhension (112) à charger ou décharger la boîte de réactif sur la plaque de chargement de réactif à travers l'orifice de chargement (214),
dans lequel l'appareil de distribution de réactif (200) comprend en outre un mécanisme de commande connecté électriquement au dispositif de plaque de réactif (210) et au mécanisme de préhension (110), de sorte que lorsque le détecteur de préparation de chargement (220) détecte que la pince de préhension (112) est dans la position de la hauteur prédéfinie et le mécanisme de commande reçoit un signal d'autorisation de chargement du dispositif de plaque de réactif (210), le mécanisme de commande commande l'élément de levage (111) pour entraîner la pince de préhension (112) à se déplacer vers le bas dans le dispositif de plaque de réactif (210) et charger la boîte de réactif, et
dans lequel le dispositif de plaque de réactif (210) comprend en outre un couvercle de chargement (212) configuré pour recouvrir l'orifice de chargement (214) ; et l'élément de levage (111) est configuré pour entraîner la pince de préhension (112) à se déplacer vers une position de l'orifice de chargement (214) pour ouvrir ou fermer le couvercle de chargement (212).

2. Appareil de distribution de réactif (200) selon la revendication 1, dans lequel la partie d'entraînement de transfert (121) comprend un dispositif d'entraînement en rotation, et dans lequel le dispositif d'entraînement en rotation est configuré pour entraîner la partie de stockage (122) pour qu'elle tourne entre un poste de retrait-mise en place, un poste d'évitement et un poste de préhension ; le poste de retrait-mise en place est configuré pour retirer ou mettre en place la boîte de réactif sur la partie de stockage (122) ; le poste de préhension est situé en dessous de la pince de préhension (112) ; et le poste d'évitement s'écarte du poste de préhension.

3. Appareil de distribution de réactif (200) selon la revendication 2, comprenant en outre un détecteur de boîte de réactif (130) et un scanner de code d'identification (140),
dans lequel le détecteur de boîte de réactif (130) est configuré pour détecter s'il y a une boîte de réactif sur la partie de stockage (122) avant que la partie de stockage (122) ne se déplace vers le poste de préhension, et lorsque le détecteur de boîte de réactif (130) détecte la boîte de réactif, le scanner de code d'identification (140) lit une information de code d'identification sur la boîte de réactif.

4. Appareil de distribution de réactif (200) selon la revendication 1, dans lequel l'élément de levage (111) comprend un moteur d'entraînement de levage (1112), une tige filetée (1114), un rail de guidage (1118) et un élément de montage (1116),
dans lequel la tige filetée (1114) est agencée verticalement ; le moteur d'entraînement de levage (1112) est relié à la tige filetée (1114) ; l'élément de montage (1116) est relié par vissage à la tige filetée (1114) ; le rail de guidage (1118) s'étend verticalement ; l'élément de montage (1116) vient en prise de manière coulissante avec le rail de guidage (1118) ; et la pince de préhension (112) est reliée à l'élément de montage (1116).

5. Appareil de distribution de réactif (200) selon l'une quelconque des revendications 1 à 4, dans lequel la pince de préhension (112) comprend un premier bras de serrage (1121) et un second bras de serrage (1122) se faisant face mutuellement,
dans lequel le premier bras de serrage (1121) est pourvu d'une première rainure en forme de V (1125) sur un côté faisant face au second bras de serrage (1122), et le second bras de serrage (1122) est pourvu d'une seconde rainure en forme de V sur un côté faisant face au premier bras de serrage (1121).

6. Appareil de distribution de réactif (200) selon la revendication 5, dans lequel
une surface de paroi de rainure de la première rainure en forme de V (1125) est pourvue d'un motif antidérapant ; et/ou
une surface de paroi de rainure de la seconde rainure en forme de V est pourvue d'un motif antidérapant.

7. Procédé de chargement et de déchargement de boîtes à réactif, **caractérisé en ce qu'**il comprend l'utilisation de l'appareil de distribution de réactif (200) selon l'une quelconque des revendications 1 à 6,
dans lequel un processus de chargement d'une boîte de réactif comprend les étapes consistant à :
mettre en place la boîte de réactif sur la partie de stockage (122) ;
entraîner la partie de stockage (122) par l'intermédiaire de la partie d'entraînement de transfert (121) pour qu'elle se déplace pour être en dessous de la pince de préhension (112) ; et
entraîner la pince de préhension (112) à se déplacer vers le bas par l'intermédiaire de l'élément de levage (111), pour saisir la boîte de réactif et charger la boîte de réactif dans le dispositif de plaque de réactif (210), et
dans lequel un processus de déchargement de la boîte de réactif comprend les étapes consistant à :
entraîner la pince de préhension (112) à se déplacer vers le bas pour saisir la boîte de réactif dans le dispositif de plaque de réactif (210), et à se déplacer vers le haut, par l'intermédiaire de l'élément de levage (111) ;
entraîner la partie de stockage (122) par l'intermédiaire de la partie d'entraînement de transfert (121) pour qu'elle se déplace pour être en dessous de la pince de préhension (112) ;
entraîner la pince de préhension (112) à se déplacer vers le bas par l'intermédiaire de l'élément de levage (111), pour mettre en place la boîte de réactif sur la partie de stockage (122) ; et
entraîner la partie de stockage (122) par l'intermédiaire de la partie d'entraînement de transfert (121) pour réinitialiser.
